# EUROPEAN PATENT SPECIFICATION

(11) **EP 2 689 382 B1**
(45) Date of publication and mention of the grant of the patent: **14.08.2019**
(21) Application number: 12760994.9
(22) Date of filing: 23.03.2012
(51) Int. Cl.: G06K 19/02, G06K 19/18, H01Q 1/22, G06K 19/00, H01Q 1/20, G06K 19/077, H01Q 9/20

(54) **RFID TAG ASSEMBLY AND LABEL PROCESS**
RFID-ETIKETTANORDNUNG UND ETIKETTIERUNGSVERFAHREN
ENSEMBLE D'ÉTIQUETTE RFID ET PROCÉDÉ D'ÉTIQUETAGE

(30) Priority: 24.03.2011 AU 2011901095; 16.12.2011 AU 2011905261
(43) Date of publication of application: 29.01.2014
(73) Proprietor: INVENGO TECHNOLOGIES SARL, 13600 La Ciotat (FR)
(72) Inventor: MARTIN, Philippe, F-21200 Beaune (FR); DERRIEN, David, F-13011 Marseille (FR); ELBAZ, Didier, F-13010 Marseille (FR); COMBES, Francois, F-13012 Marseille (FR)
(74) Representative: Swindell & Pearson Limited
(86) International application number: PCT/AU2012/000305
(87) International publication number: WO 2012/126063

(56) References cited:
- EP-A1- 2 058 753
- WO-A1-2010/111743
- US-A- 5 786 626
- US-A1- 2002 003 496
- US-A1- 2005 093 678
- US-A1- 2006 043 198
- US-A1- 2006 243 811
- US-A1- 2007 052 613
- US-A1- 2008 074 272
- US-A1- 2008 106 419
- US-A1- 2008 252 460
- US-A1- 2009 230 196
- US-A1- 2009 250 522
- US-A1- 2010 187 316
- US-A1- 2010 321 161
- US-B1- 6 378 774
- US-B2- 6 827 817
- US-B2- 7 906 189

## Description

### TECHNICAL FIELD

The present disclosure relates to a tag assembly for attaching an RFID tag to a surface including a flexible surface such as textile or fabric and a process for producing an RFID label.

### BACKGROUND OF THE DISCLOSURE

Use of a generic RFID tag on a flexible surface such as textile or fabric typically involves stitching or bonding the tag directly to the fabric or enclosing it within a patch to provide an enclosure for the tag However this often leads to cumbersome and inflexible solutions particularly with a clothing garment that may be uncomfortable to wear.

In one prior art solution, a conductive thread is used to provide a secondary antenna and a plastics encapsulated RFID tag in the form of a traditional clothing button is stitched to the fabric in order to couple to the secondary antenna to form a larger overall tag system. While this solution is flexible and comfortable the thread link holding the button to the fabric loosens over time with repeated washing cycles and the button can rock about or tilt, deteriorating electromagnetic coupling between a primary antenna on the RFID tag and the secondary antenna associated the fabric.

WO2010/111743 discloses a method of producing an RFID tag assembly including an associated antenna and attachment means suitable for attaching the tag assembly to a material. The material may be flexible such as fabric or relatively rigid such as cardboard. The method includes forming the associated antenna and the attachment means as a unitary conductive frame.

US2009/0230196 discloses an RFID tag comprising at least one antenna and electronic tag components cooperating with the antenna, wherein the antenna and the electronic tag components are positioned on a common substrate,

US6827817 discloses a method for producing individual folded labels incorporating a radio frequency device, the method comprising the steps of providing a ribbon of labels containing a woven logo or text.

EP205B753 discloses an RFID tag manufacturing method in which a heat-curable adhesive is applied to an area where a circuit chip is placed on a base to which antennae are wired so as to be connected with the circuit chip.

US2006/0043198 discloses an RFID device, such as an RFID tag or label, including a combined reactive coupler electrically coupling a transponder chip to an antenna.

US6378774 discloses a smart card comprising an IC module and an antenna for non contact transmission. The IC module has both a contact-type function and a non-contact-type function.

US2006/0243811 discloses a non-contact IC card which has a main antenna supporting a first frequency band and an IC device connected to the main antenna to perform data transmission and reception processing and an attaching body detachably attached to the non-contact IC card which has a sub-antenna supporting a second frequency band different from the first frequency band.

US2008/0106419 discloses a biological implantation RFID tag which can be subcutaneously implanted in a small animal without significantly stressing it and which exhibits improved communication performance.

An object of the present disclosure is to at least alleviate the disadvantages of the prior art.

### SUMMARY OF THE DISCLOSURE

The present invention is set out in the independent claims.

Preferred embodiments are defined by the dependent claims.

According to an aspect of the present disclosure there may be provided a two part tag solution, namely an RFID tag such as AK module or QFP package including an associated or primary antenna and means for attaching the tag to a surface such as fabric or cardboard. In some examples the primary antenna may couple to a secondary antenna provided on or with the surface. This solution may be particularly useful since use of ultra high frequency (UHF) as a carrier frequency for RFID tags has become more widespread following introduction of international UHF RFID standards. Although RFID protocols have converged, allowed regional UHF carrier frequencies have not. A separate secondary antenna may be useful for longer range operation because it may allow itself and thus the overall tag assembly, to be optimised for an operating region, using a common and economically manufacturable generic tag such as an AK module/ QFP package which may account for most of the total cost.

The present disclosure may address problems of the prior art by providing a tag assembly including a receptacle or casing for receiving the RFID tag to replace the unstable button. The receptacle or casing may hold the RFID tag firmly in place to maintain a relatively consistent electromagnetic coupling between the primary antenna associated with the RFID tag and a secondary antenna associated with a flexible surface such as textile or fabric. The coupling may be substantially maintained throughout many washing cycles of service life of a fabric item.

### BRIEF DESCRIPTION OF THE DRAWINGS

Figs. 1A and 1B show a basic receptacle or casing for an RFID tag;
Fig. 2 shows an RFID tag being received in the receptacle or casing of Fig 1;
Fig. 3 shows an RFID tag being retained in the receptacle or casing;
Fig. 4 shows a backing plate associated with the receptacle or casing of Figs.1 to 3;
Figs. 5 and 6 show a dipole antenna associated with the receptacle or casing of Figs.1 to 3;
Fig. 7 shows an RFID tag associated with the receptacle or casing and antenna of Fig.6;
Fig 8 shows an alternative dipole antenna associated with the receptacle or casing of Figs.1 to 4;
Fig. 9 shows an RFID tag being received in the receptacle or casing of Fig.8;
Fig. 10 shows an RFID tag associated with the receptacle or casing and antenna of Fig 8;
Figs 11 to 14 show a process for producing an RFID label;
Fig. 15 shows a thermosonic tool for performing welding associated with an RFID tag;
Figs. 16A, 16B. 16C show examples of tag labels that have been cut to accommodate short, medium and long antenna tracks respectively;
Figs. 17 to 22 show a further process for producing an RFID label;
Figs. 23 and 24 show a further process for producing an RFID label;
Fig. 25 shows details of a tape substrate being woven; and
Fig 26 shows details of a conductive yarn.

### DETAILED DESCRIPTION

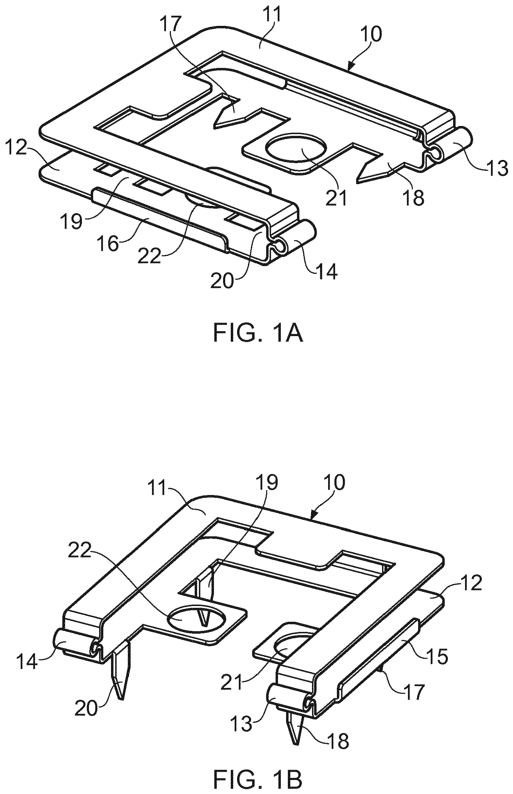

Referring to Figs. 1A and 1B, a basic receptacle or casing for an RFID tag (such as an AK module or QFP package) comprises a frame 10 including upper frame portion 11 and lower frame portion 12. Each frame portion 11, 12 is substantially in the shape of a U. Frame portions 11, 12 are joined at the legs of each U via junctions 13, 14, Frame portions 11, 12 may be formed by die stamping from a roll or sheet of stainless steel. The junctions 13, 14 are integrally formed during the die stamping operation. Junctions 13, 14 are adapted to receive a dipole antenna as described below.

Frame 10 includes turned side portions 15, 16 formed by turning edges of lower frame portion 12. Side portions 15, 16 are adapted to at least laterally restrain an RFID tag received in the receptacle or casing. Frame 10 includes integrally formed legs 17-20 for attaching the frame to a flexible surface such as fabric. Each leg 17 to 20 is sharpened at its free end for penetrating the surface. Frame 10 includes eyelets 21, 22 suitable for attaching the receptacle or casing to a flexible surface via stitching or the like.

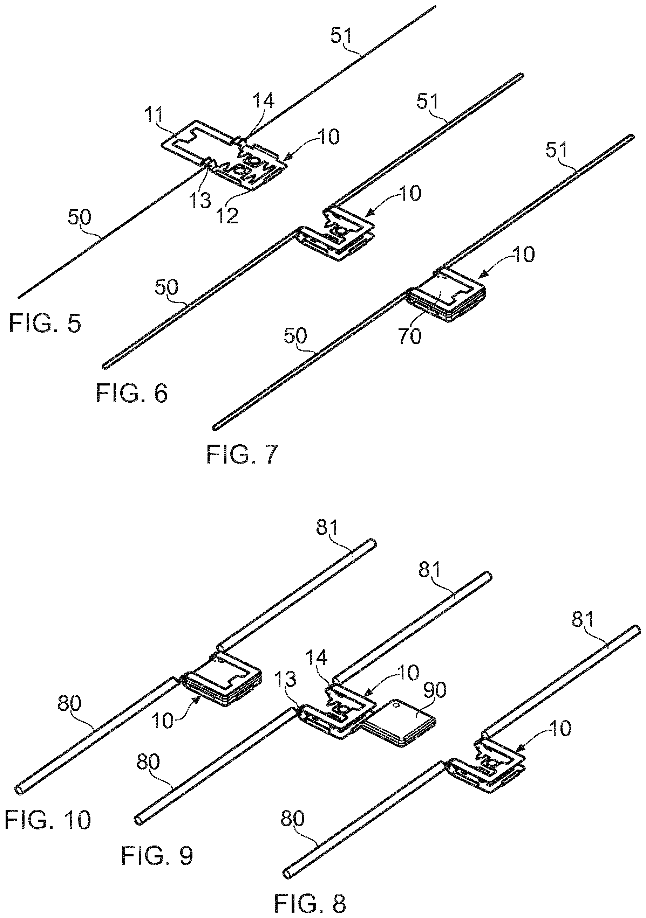

The frame 10 may be die stamped substantially in a flat configuration as shown in Fig.5 with integral frame portions 11, 12, junctions 13, 14, side portions 15, 16, legs 17 to 20 and eyelets 21, 22. Frame portions 11, 12 may subsequently be turned towards each other to form the clip configuration shown in Figs 1 to 3 and 6 to 10.

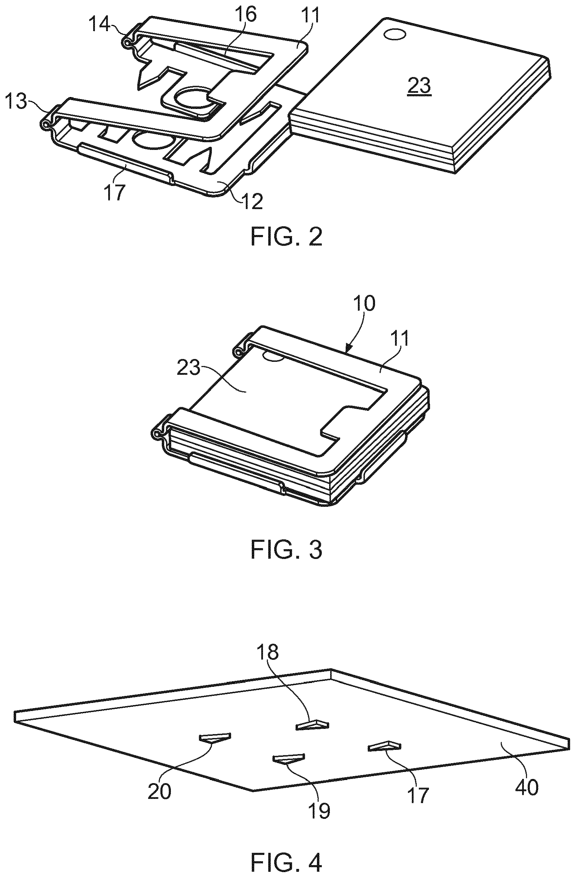

Fig. 2 shows an RFID tag 23 being received in frame 10. RFID tag 23 may include a separately formed adaptive kernel (AK) module (UHF tag) manufactured by Tagsys SAS. The AK module is conveniently provided in the form of a quad flat pack (QFP) kernel. Frame portion 11 may be forced open from the rest position shown in Fig. 1 relative to frame portion 12 against a resilient restoring force provided via junctions 13, 14. Following insertion of tag 23, the restoring forces returns frame portion 11 to its rest position to securely hold tag 23 between frame portions 11, 12, as shown in Fig.3.

Fig 4 shows a backing plate 40 including apertures for receiving legs 17 to 20 associated with the receptacle or casing of Figs.1 to 3. Backing plate 40 may be formed from any suitable material such as plastics. Backing plate 40 may be positioned on the underside of a flexible surface such as fabric or textile. Following attachment of the receptacle or casing to a surface, legs 17 to 20 may be passed through the apertures of backing plate 40 and turned approximately 90 degrees as shown in Fig.4 to secure the receptacle or casing to the flexible surface.

Fig. 5 shows a pair of substantially straight conductors 50, 51 electrically welded to frame 10 to form a dipole antenna. Conductors 50, 51 may be adapted to make a long dipole antenna if required. Conductors 50, 51 are welded to frame 10 at junctions 13, 14 respectively. Welding of conductors 50, 51 may be performed after stamping of frame 10. Following welding, frame portions 11, 12 are subsequently turned towards each other to form a tag assembly as shown in Fig 6. Fig. 7 shows an RFID tag 70 in association with the tag assembly of Fig.6 suitable for attachment to a flexible surface or the like.

Fig. 8 shows a pair of preformed helical conductors 80, 81 electrically welded to frame 10 to form a dipole antenna. Conductors 80, 81 are welded to frame 10 at junctions 13, 14 respectively. The welding may be performed after stamping of frame 10. Following welding frame portions 11, 12 may subsequently be turned towards each other to form a tag assembly as shown in Fig 8. Fig 9 shows an RFID tag 90 being inserted into the tag assembly of Fig.8. Helical conductors 80, 81 may be adjusted in length to suit tag 90 by stretching. Fig. 10 shows RFID tag 90 in association with the tag assembly of Fig.8 suitable for attachment to a flexible surface or the like.

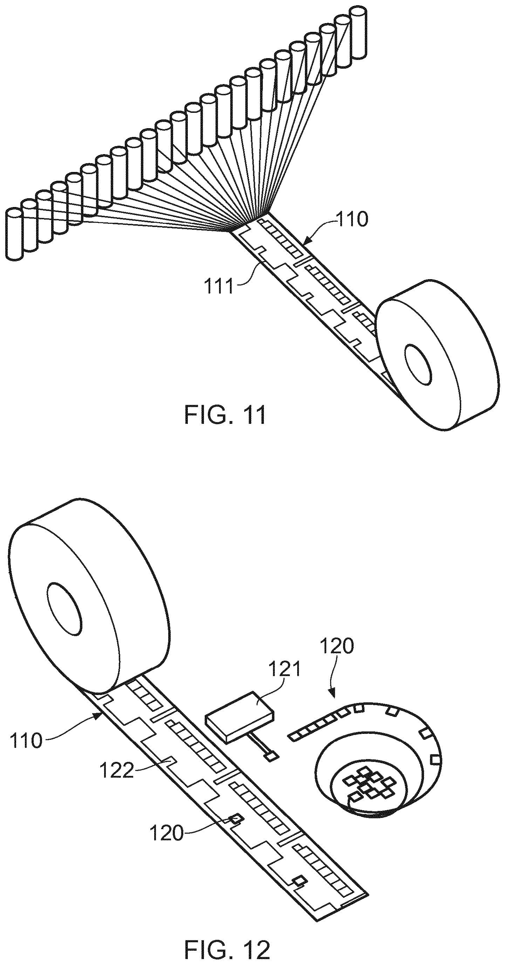

Fig.11 shows tape substrate 110 being woven or knitted on a loom (not shown). Tape substrate 110 comprises a plurality of yarns including synthetic yarns such as polyester nylon, polyamide and carbon and conductive yarns such as stainless steel suitable for industrial washing liquids. The conductive yarns may be woven, knitted and/or stitched in association with tape substrate 110 to form an antenna pattern 111. The antenna pattern 111 may form plural separate antennas after tape substrate 110 is singulated into individual labels. Each label may be attached to an article such as an item of clothing. The tape substrate may include a printed logo. The logo may be laser printed onto the singulated label during assembly or it may be printed onto a reel of tape substrate before assembly.

Fig. 12 shows a production line process for attaching RFID tags 120 to tape substrate 110 such as by means of a multi-step online machine. The process includes supplying individual tags 120 via a bowl feeder or the like and testing and programming each tag 120 at a testing station 121 prior to attaching the tags 120 to tape substrate 110. Each tag 120 is attached to tape substrate 110 via a layer of adhesive 122 applied to tape substrate 110 This is followed by accurate positioning of each tag 120 relative to antenna pattern 111 to ensure good electromagnetic coupling to a primary antenna associated with tag 120.

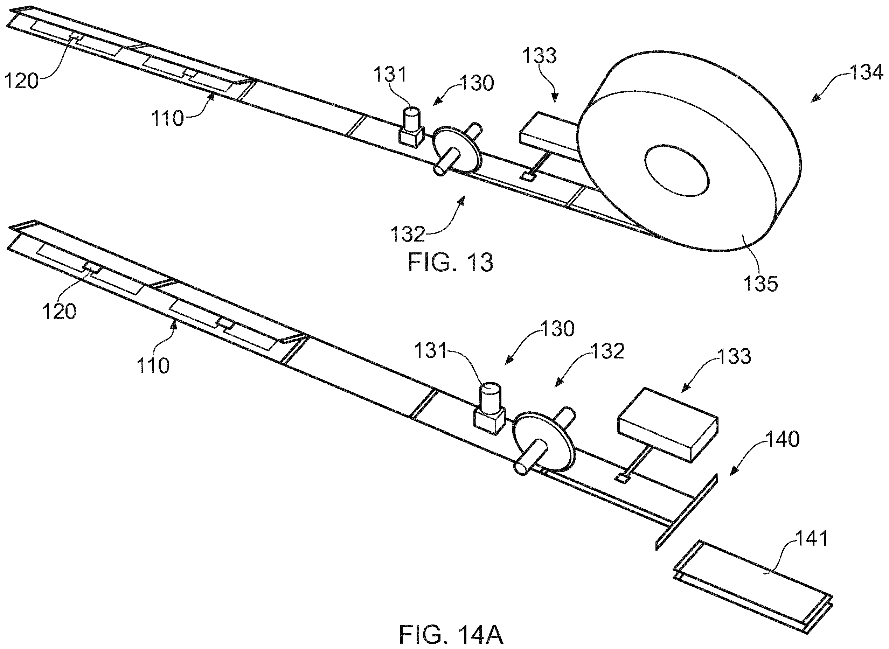

Fig.13 shows a fusing station 130 which follows a tape folding station (not shown) for folding tape substrate 110 in half over tags 120. Fusing station 130 includes fusing tool 131 including four sonotrodes (raised portions). The sonotrodes cooperate with an anvil (not shown) to make four spot welds around RFID tag 120. The four spot welds create a pocket between the folded layers of tape substrate 110 for locating RFID tag 120 in the pocket. Fig.13 includes an ultrasonic welding station 132 for continuously sealing the open seam comprising folded layers of tape substrate 110. This is followed by testing of each label with tag 120 at testing station 133. Labels that do not pass the test may be marked with a black dot or punched with a hole for identification. Fig 13 includes a winding station 134 for winding the tested labels onto roll 135 suitable for subsequent automatic deposition of labels.

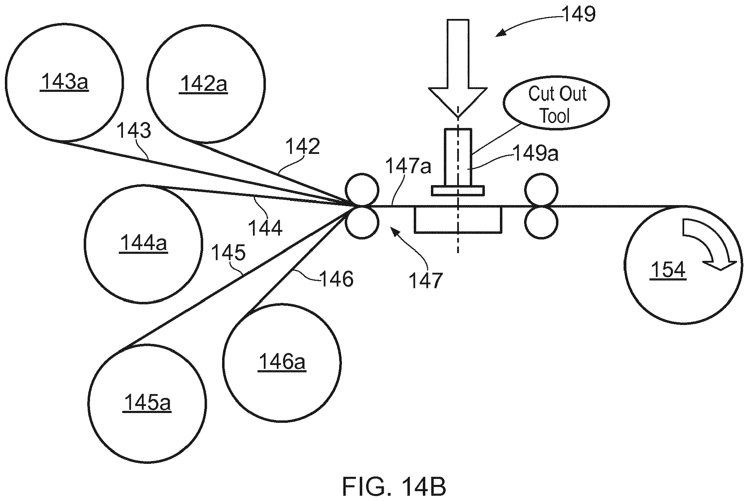

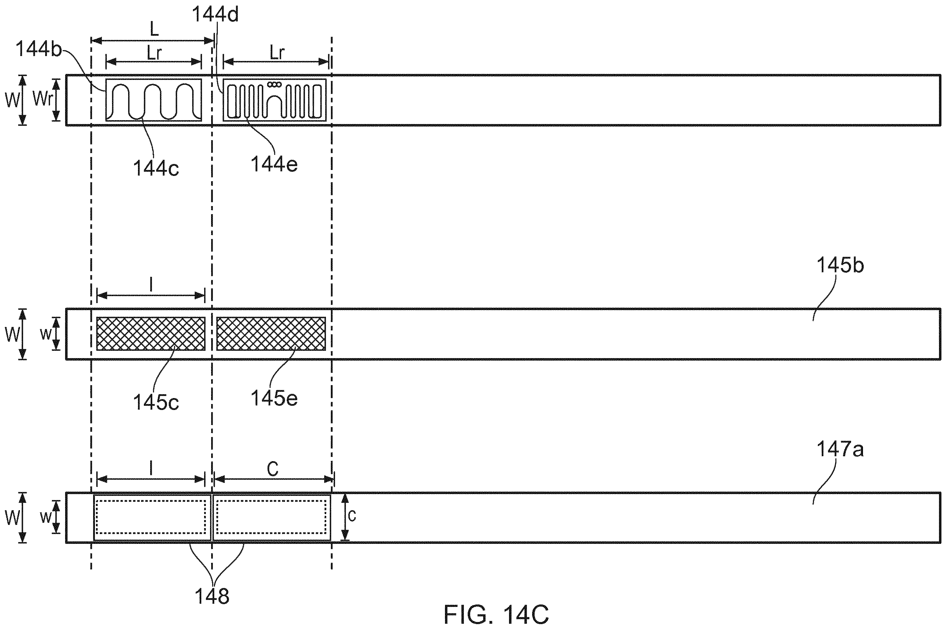

Fig.14A shows a modification of the process shown in Fig.13 including singulation station 140 for cutting tape substrate 110 into individual labels 141. The modified process in Fig 14 is suitable for manual deposition of individual labels 141.

An alternative method is described below with reference to Figs. 14B and 14C. In the alternative method the label substrate 110 may be produced from a plurality of separate layers 142-146. The layers 142-146 may be supplied in the form of tapes or ribbons from respective input reels 142a-146a. Layer 142 includes a printable protective polymeric overlay. Layer 143 includes an adhesive. Layer 144 includes a woven substrate (fabric or textile) 144b with conductive thread woven therein to provide a secondary antenna inlay 144c. Alternatively layer 144 may include a polymeric or synthetic substrate (PEN) 144d with an etched copper or aluminium track to provide the secondary antenna inlay 144e. Layer 145 includes a silicon liner 145b with preformed islands of heat activated adhesive 145c.

Layer 146 includes a silicon impregnated paper carrier or the like. Layers 142-146 may be joined together by means of pressing rollers 147 to cold laminate the separate layers into a composite label assembly 147a. The composite assembly may be precut into separate labels 148 at a cutting station 149 via a cutting tool 149a. The finished product is wound onto output reel 154.

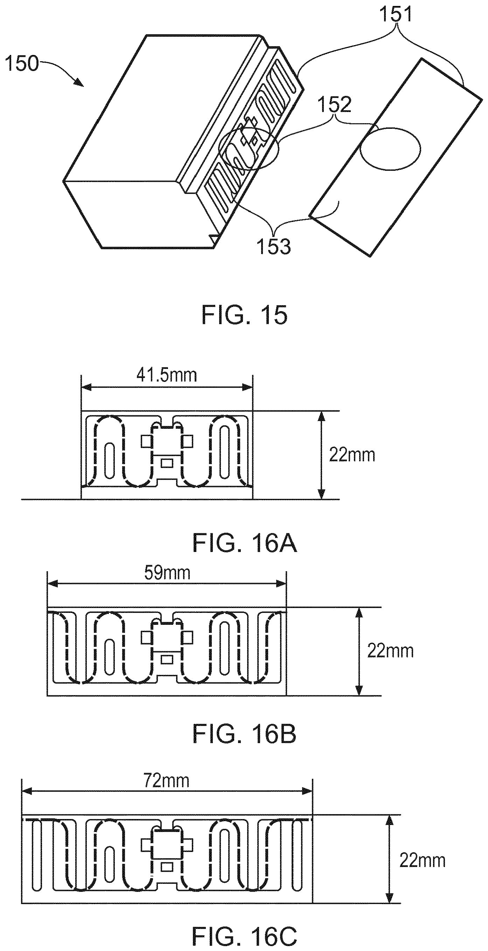

Fig. 15 shows a welding tool 150 including a peripheral sonotrode 151 for fusing together upper and lower tapes or ribbons such as the folded layers of tape substrate 110 shown in Figs. 13 and 14a. Welding tool 150 may be used in place of fusing tool 131 described above in connection with Fig. 13. Welding tool 150 also includes four spot sonotrodes 152 adapted to make four spot welds around RFID tag 120 similar to fusing tool 131 to create a pocket between the upper and lower tapes or ribbons for locating RFID tag 120 in the pocket. Welding tool 150 also includes partition sonotrodes 153 adapted to partition a label to accommodate short (42mm), medium (59mm) or long (72mm) antenna tracks respectively Examples of label 141 that has been cut to accommodate short, medium and long antenna tracks are shown in Figs. 16A, 16B and 16C respectively.

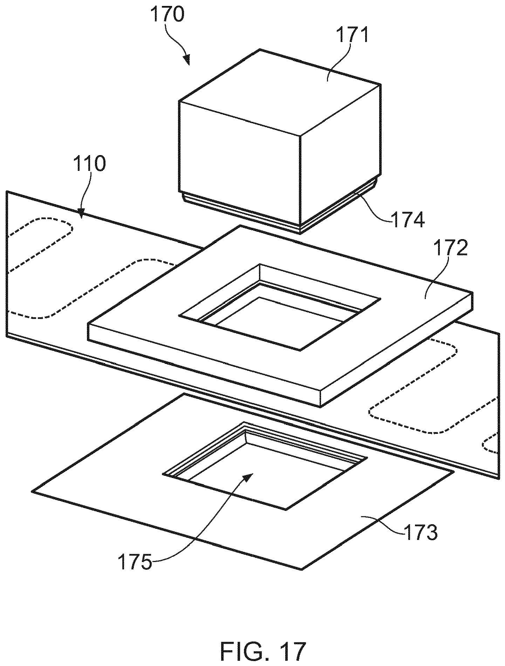

Figs, 17 to 22 show a modification to the production line process in Figs. 12 to 14. Fig 17 includes cavity forming station 170 for forming a tub cavity in tape substrate 110. The tub cavity may be adapted to receive an RFID tag The tub cavity may be approximately 1-2mm deep and dimensioned to receive the RFID tag Cavity forming station 170 includes sonotrode or die head 171, clamp 172 and matrix 173 (anvil). Die head 171 includes base 174 adapted to form a rectangular cavity in tape substrate 110. Matrix 173 includes cavity 175 in a shape of a rectangular tub for receiving base 174 of die head 171. Clamp 172 is adapted to hold tape substrate 110 against matrix 173 during a cavity forming operation. During the cavity forming operation, base 174 of die head 171 is vibrated ultrasonically (e.g. at 40-60 KHz) and pressed against tape substrate 110, causing tape substrate 110 to heat and deform locally against cavity 175 in matrix 173. Ultrasonic vibration may be provided by means of a piezoelectric transducer or the like. In some versions die head 171 and matrix 173 may be adapted to form a round instead of a rectangular cavity.

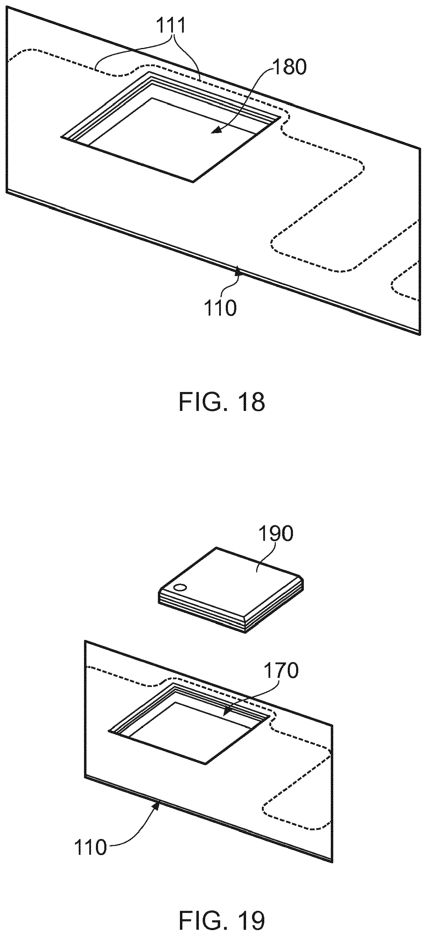

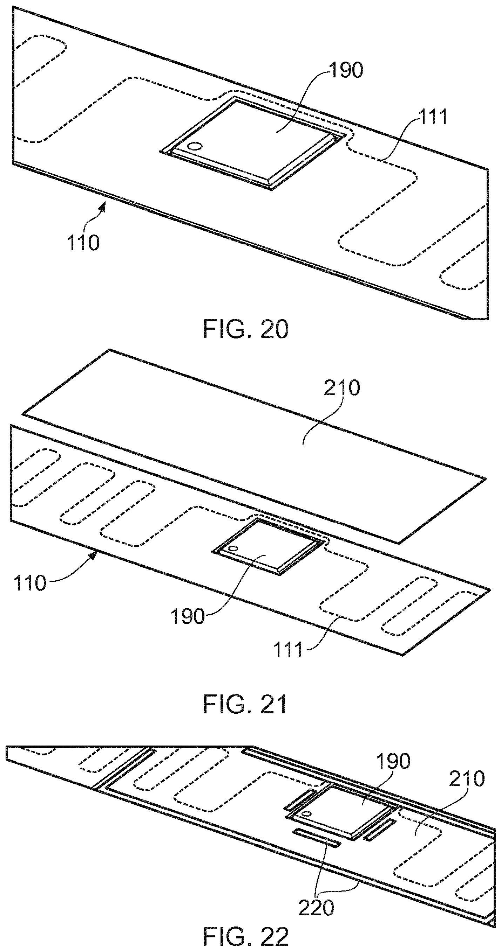

Fig. 18 shows a view of tape substrate 110 including cavity 180 formed with an antenna pattern 111 passing around cavity 180. Fig. 19 shows RFID tag 190 after testing positioned above cavity 180 in tape substrate 110 and before being dropped into cavity 180. Fig. 20 shows RFID tag 190 after it is dropped into cavity 180 in tape substrate 110. Fig 21 shows a polyester film cover 210 comprising clear or opaque ribbon positioned over tape substrate 110 and RFID tag 190 in cavity 180. Film cover 210 may be ultrasonically welded to tape substrate 110 via seams 220 as shown in Fig. 22.

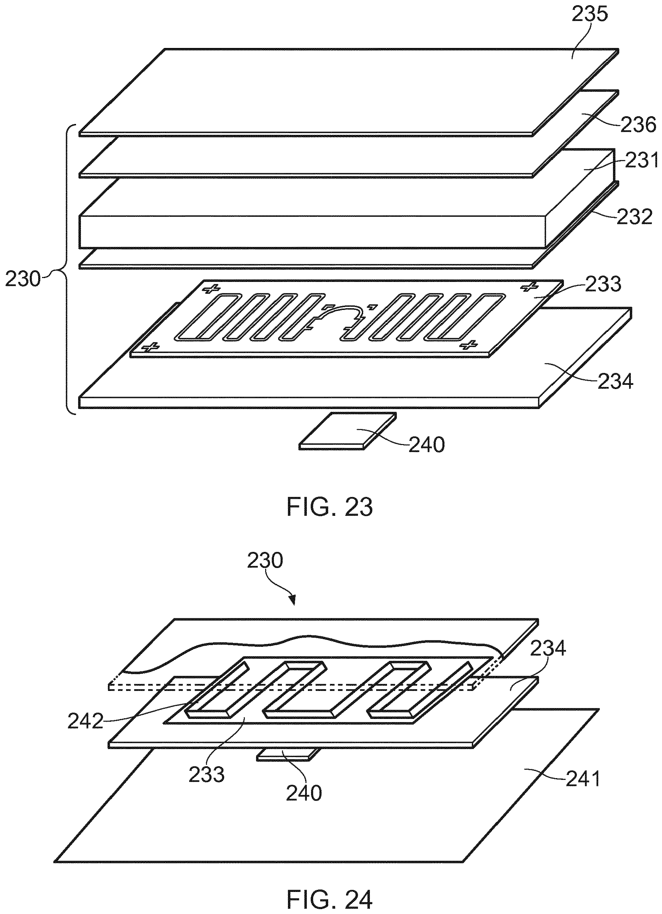

An alternative tag assembly method that does not require a tape substrate or cavity is described below with reference to Figs 23 and 24. Fig. 23 shows a thermo patch assembly 230 comprising at least the following layers:
1. a top woven polymeric sheet or synthetic layer 231;
2. an adhesive layer 232 for a secondary antenna layer;
3. a secondary antenna layer 233; and
4. a heat activated adhesive layer 234 such as a polyurethane adhesive layer.

Secondary antenna layer 233 may be provided on a woven (textile or fabric) or plastics (PEN) substrate. An optional overlayer 235 such as polycarbonate sheet and a polyurethane primer layer 236 may be applied over top layer 231 to make the patch assembly 230 printable and/or waterproof. The thermo patch assembly 230 may be used to apply an RFID tag 240 to a garment or fabric as shown in Fig. 24.

In Fig. 24 an RFID tag 240 is sandwiched between a flexible surface 241 such as fabric, textile or a garment and an opaque and printable thermo patch 230. As described above, thermo patch 230 includes a layer of heat activated adhesive 234 on its underside adapted to hold antenna layer 233. Antenna layer 233 comprises a polymeric substrate such as polyethylene napthalate (PEN) with an antenna pattern 242 applied thereto. Antenna pattern 242 comprises a conductor such as copper or aluminium. Heat activated adhesive 234 is interposed between layer 233 and surface 241 for heat sealing patch 230 to hold antenna layer 233 and RFID tag 240 in position against surface 241. Each tag 240 should be placed accurately relative to antenna pattern 242 to ensure good electromagnetic coupling to a primary antenna associated with tag 240.

The method of attaching thermo patch 230 to surface 241 may be performed manually using heat sealing equipment set at around 180-200°C to press and activate the adhesive. The patch assembly may then be resistant to washers and driers. The process may use a conventional etched aluminium or copper conductive antenna on a PEN substrate (the latter may withstand higher temperatures than PET) which is adhered to a thermo sealing patch. Printable patches 230 with secondary antenna already attached and covered with heat activated adhesive such as hot melt glue may be supplied to an operator ready for attachment to garment/fabric surface 241 or the like.

The operator may initially place RFID tag 240 (QFP/TQFP) on top of garment/fabric surface 241, and then cover it with a thermo patch 230 including secondary antenna layer 233 and pattern 242. Thermal sealing equipment may then be used to press and heat thermo patch 230 on top of garment/fabric surface 241 causing thermo patch 230 and RFID tag 240 to be attached to garment/fabric surface 241.

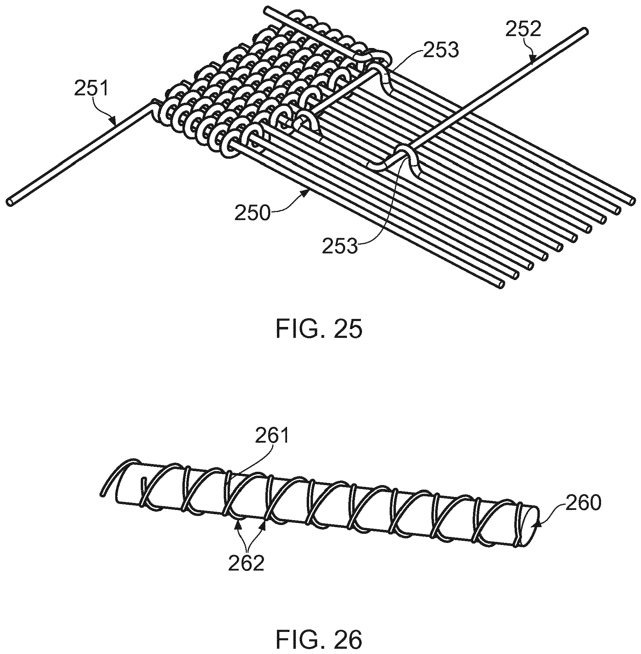

Fig. 25 shows a tape substrate such as tape substrate 110 in Fig. 11, being woven on a loom (not shown). Tape substrate 110 includes a plurality of warp yarns 250 stretched on a loom and weft yarns 251 being drawn through the warp yarns 250. Tape substrate 110 includes a conductive yarn 252 drawn through loops 253 in warp yarns 250 to create a secondary antenna pattern such as antenna pattern 111 in Fig. 11.

Fig. 26 shows an example of conductive yarn 252 including a bundle of stainless steel filaments or wires 260. Each stainless steel filament or wire in bundle 260 may be a few hundred µm in diameter. Each bundle 260 may include a few tens of stainless steel filaments or wires wrapped with synthetic threads or filaments 261 such as polyamide or polyester, to form a synthetic sheath 262. To maintain the stainless steel filaments bundled together, they are shown double wrapped clockwise and anticlockwise with the synthetic threads or filaments 261. As well as keeping the stainless steel filaments bundled together the synthetic sheath 262 helps to reduce damage to synthetic yarns of tape substrate 110 due to cutting that may be caused by the edges of the stainless steel filaments as the latter is woven into tape substrate 110.

## Claims

1. An RFID tag assembly adapted to be attached to a flexible surface such as fabric, textile or an item of clothing, said RFID tag assembly comprising:
an RFID tag (70) including an associated primary antenna;
a receptacle frame (10) comprising conductive material for receiving said RFID tag (70);
a secondary antenna associated with said flexible surface,
said RFID tag assembly being **characterised in that**:
the receptacle frame (10) includes attachment means (17-20) for attaching the frame (10) to said flexible surface;
the secondary antenna includes a pair of conductors (50, 51; 80; 81) attached to said frame (10); and
the receptacle frame (10) receives and securely holds the RFID tag (70) therein such that said primary antenna maintains electromagnetic coupling with said secondary antenna.

2. An RFID tag assembly according to claim 1 wherein said secondary antenna includes a dipole antenna.

3. An RFID tag assembly according to any one of the preceding claims wherein said conductive material includes stainless steel.

4. An RFID tag assembly according to any one of the preceding claims wherein said attachment means (17-20) includes a plurality of legs (17-20) connected to said frame (10) and wherein the free end of each leg includes a sharpened lead to penetrate said flexible surface.

5. An RFID tag assembly according to claim 4 including a backing plate (40) for receiving the plurality of legs (17-20).

6. A RFID tag assembly according to claim 5 wherein said backing plate (40) includes apertures to accommodate said legs (17-20).

7. A RFID tag assembly according to any one of the preceding claims wherein said pair of conductors (50, 51; 80; 81) are electrically welded to said frame (10).

8. A method of attaching an RFID tag (70) including an associated primary antenna to a flexible surface such as fabric, textile or an item of clothing, said method comprising:
forming a receptacle frame (10) from conductive material for receiving said RFID tag (70);
providing a secondary antenna in association with said flexible surface,
said method being **characterised by**:
forming said receptacle frame (10) with attachment means (17-20) for attaching the frame (10) to said flexible surface;
the secondary antenna including a pair of conductors (50, 51; 80; 81) attached to said frame (10); and
receiving and securely holding the RFID tag (70) in the receptacle frame (10) such that said primary antenna maintains electromagnetic coupling with said secondary antenna.

9. A method according to claim 8 wherein said secondary antenna includes a dipole antenna.

10. A method according to claim 8 or 9 wherein the step of forming said frame (10) includes die stamping from a roll of said conductive material.

11. A method according to claim 10 wherein said conductive material includes stainless steel.

12. A method according to any one of claims 8 to 11 including forming the attachment means (17-20) as a plurality of legs (17-20) connected to said frame (10) and including forming the free end of each leg (17-20) with a sharpened lead to penetrate said flexible material.

13. A method according to claim 12 including providing a backing plate (40) for receiving the plurality of legs (17-20) wherein said backing plate (40) includes apertures to accommodate said legs (17-20).

14. A method according to any one of claims 8 to 13 wherein said pair of conductors (50, 51; 80; 81) are electrically welded to said frame.

## Patentansprüche

1. RFID-Etikettanordnung, die an einer flexiblen Oberfläche wie Stoff, Textil oder einem Kleidungsstück angebracht werden kann, wobei die RFID-Etikettanordnung umfasst:
ein RFID-Etikett (70) mit einer zugeordneten Primärantenne;
einen Aufnahmerahmen (10) mit leitendem Material zum Aufnehmen des RFID-Etiketts (70);
eine Sekundärantenne, die der flexiblen Oberfläche zugeordnet ist,
wobei die RFID-Etikettanordnung **dadurch gekennzeichnet ist, dass**:
der Aufnahmerahmen (10) Befestigungsmittel (17-20) zum Befestigen des Rahmens (10) an der flexiblen Oberfläche enthält;
die Sekundärantenne ein Paar Leiter (50, 51; 80; 81) umfasst, die an dem Rahmen (10) angebracht sind; und
der Aufnahmerahmen (10) das RFID-Etikett (70) aufnimmt und darin sicher hält, so dass die Primärantenne eine elektromagnetische Kopplung mit der Sekundärantenne aufrechterhält.

2. RFID-Etikettanordnung nach Anspruch 1, wobei die Sekundärantenne eine Dipolantenne enthält.

3. RFID-Etikettanordnung nach einem der vorhergehenden Ansprüche, bei der das leitende Material rostfreien Stahl enthält.

4. RFID-Etikettanordnung nach einem der vorhergehenden Ansprüche, bei der das Befestigungsmittel (17-20) mehrere mit dem Rahmen (10) verbundene Schenkel (17-20) aufweist und bei der das freie Ende jedes Schenkels einen angespitzten Vorsprung aufweist, um die flexible Oberfläche zu durchdringen.

5. RFID-Etikettanordnung nach Anspruch 4 mit einer Stützplatte (40) zum Aufnehmen der Mehrzahl von Schenkeln (17-20).

6. RFID-Etikettanordnung nach Anspruch 5, wobei die Stützplatte (40) Öffnungen zur Aufnahme der Schenkel (17-20) aufweist.

7. RFID-Etikettanordnung nach einem der vorhergehenden Ansprüche, bei der das Leiterpaar (50, 51; 80; 81) elektrisch an den Rahmen (10) geschweißt ist.

8. Verfahren zum Anbringen eines RFID-Etiketts (70) mit einer zugeordneten Primärantenne an einer flexiblen Oberfläche wie einem Stoff, einem Textil oder einem Kleidungsstück, wobei das Verfahren umfasst:
Ausbilden eines Aufnahmerahmens (10) aus leitendem Material zur Aufnahme des RFID-Etiketts (70);
Bereitstellen einer Sekundärantenne in Verbindung mit der flexiblen Oberfläche,
wobei das Verfahren **gekennzeichnet ist durch**:
Ausbilden des Aufnahmerahmens (10) mit Befestigungsmitteln (17-20) zum Befestigen des Rahmens (10) an der flexiblen Oberfläche;
wobei die Sekundärantenne ein Paar Leiter (50, 51; 80; 81) enthält, die an dem Rahmen (10) angebracht sind; und
Aufnehmen und sicheres Halten des RFID-Etiketts (70) in dem Aufnahmerahmen (10), so dass die Primärantenne eine elektromagnetische Kopplung mit der Sekundärantenne aufrechterhält.

9. Verfahren nach Anspruch 8, wobei die Sekundärantenne eine Dipolantenne enthält.

10. Verfahren nach Anspruch 8 oder 9, wobei der Schritt des Bildens des Rahmens (10) das Stanzen von einer Rolle des leitfähigen Materials umfasst.

11. Verfahren nach Anspruch 10, wobei das leitende Material rostfreien Stahl enthält.

12. Verfahren nach einem der Ansprüche 8 bis 11, bei dem das Befestigungsmittel (17-20) als eine Vielzahl von mit dem Rahmen (10) verbundenen Schenkeln (17-20) geformt wird und das freie Ende jedes Schenkels (17-20) mit einem angespitzten Vorsprung geformt wird, um das flexible Material zu durchdringen.

13. Verfahren nach Anspruch 12, umfassend das Bereitstellen einer Stützplatte (40) zum Aufnehmen der Mehrzahl von Schenkeln (17-20), wobei die Stützplatte (40) Öffnungen zum Aufnehmen der Schenkel (17-20) enthält.

14. Verfahren nach einem der Ansprüche 8 bis 13, bei dem das Leiterpaar (50, 51; 80; 81) elektrisch an den Rahmen geschweißt wird.

## Revendications

1. Ensemble d'étiquette RFID adapté pour être fixé à une surface flexible telle qu'un tissu, un textile ou un vêtement, ledit ensemble d'étiquette RFID comprenant :
une étiquette RFID (70) comprenant une antenne principale associée ;
un cadre de réceptacle (10) comprenant un matériau conducteur pour recevoir ladite étiquette RFID (70) ;
une antenne secondaire associée à ladite surface flexible,
ledit ensemble d'étiquette RFID étant **caractérisé en ce que** :
le cadre de réceptacle (10) comprend des moyens de fixation (17-20) pour fixer le cadre (10) à ladite surface flexible ;
l'antenne secondaire comprend une paire de conducteurs (50, 51 ; 80 ; 81) fixés audit châssis (10) ; et
le cadre de réceptacle (10) reçoit et maintient fermement l'étiquette RFID (70) à l'intérieur de telle sorte que ladite antenne primaire maintienne un couplage électromagnétique avec ladite antenne secondaire.

2. Ensemble d'étiquette RFID selon la revendication 1, dans lequel ladite antenne secondaire comprend une antenne dipôle.

3. Ensemble d'étiquette RFID selon l'une quelconque des revendications précédentes, dans lequel ledit matériau conducteur comprend de l'acier inoxydable.

4. Ensemble d'étiquette RFID selon l'une quelconque des revendications précédentes, dans lequel ledit moyen de fixation (17-20) comprend une pluralité de jambes (17-20) reliées audit châssis (10) et dans lequel l'extrémité libre de chaque jambe comprend une pointe effilée pour pénétrer dans ladite surface flexible.

5. Ensemble d'étiquette RFID selon la revendication 4, comprenant une plaque de support (40) pour recevoir la pluralité de jambes (17-20).

6. Ensemble d'étiquette RFID selon la revendication 5, dans lequel ladite plaque de support (40) comprend des ouvertures pour loger lesdites jambes (17-20).

7. Ensemble d'étiquette RFID selon l'une quelconque des revendications précédentes, dans lequel ladite paire de conducteurs (50, 51 ; 80 ; 81) est soudée électriquement audit cadre (10).

8. Procédé de fixation d'une étiquette RFID (70) comprenant une antenne principale associée sur une surface flexible telle qu'un tissu, un textile ou un vêtement, ledit procédé comprenant les étapes consistant à :
former un cadre de réceptacle (10) à partir d'un matériau conducteur pour recevoir ladite étiquette RFID (70) ;
fournir une antenne secondaire en association avec ladite surface flexible,
ledit procédé étant **caractérisé par** les étapes consistant à :
former ledit cadre de réceptacle (10) avec des moyens de fixation (17-20) pour fixer le cadre (10) à ladite surface flexible ;
l'antenne secondaire comprenant une paire de conducteurs (50, 51 ; 80 ; 81) fixés audit châssis (10) ; et
recevoir et maintenir fermement l'étiquette RFID (70) dans le cadre de réceptacle (10) de telle sorte que ladite antenne principale maintienne un couplage électromagnétique avec ladite antenne secondaire.

9. Procédé selon la revendication 8, dans lequel ladite antenne secondaire comprend une antenne dipôle.

10. Procédé selon la revendication 8 ou 9, dans lequel l'étape de formation dudit cadre (10) comprend le matriçage à partir d'un rouleau dudit matériau conducteur.

11. Procédé selon la revendication 10, dans lequel ledit matériau conducteur comprend de l'acier inoxydable.

12. Procédé selon l'une quelconque des revendications 8 à 11, comprenant la formation des moyens de fixation (17-20) sous la forme d'une pluralité de jambes (17-20) reliées audit châssis (10) et la formation de l'extrémité libre de chaque jambe (17-20) avec une pointe effilée pour pénétrer dans ledit matériau flexible.

13. Procédé selon la revendication 12, comprenant la fourniture d'une plaque de support (40) pour recevoir la pluralité de jambes (17-20), ladite plaque de support (40) comprenant des ouvertures pour loger lesdites jambes (17-20).

14. Procédé selon l'une quelconque des revendications 8 à 13, dans lequel ladite paire de conducteurs (50, 51 ; 80 ; 81) est soudée électriquement audit châssis.
